# EUROPEAN PATENT APPLICATION

(11) **EP 1 884 640 A1**
(43) Veröffentlichungstag der Anmeldung: **06.02.2008**
(21) Anmeldenummer: 06016349.0
(22) Anmeldetag: 04.08.2006
(51) Int. Cl.: F02C 7/08, F01D 25/10, F02C 6/18, F01K 23/10

(54) **Verfahren zum Betrieb einer Gasturbinenanlage, Steuereinheit sowie Gas- und Dampfturbinenanlage**

(71) Anmelder: SIEMENS AKTIENGESELLSCHAFT, 80333 München (DE)
(72) Erfinder: Schmid, Udo, 90475 Nürnberg (DE)

(57) **Zusammenfassung**

Die Erfindung betrifft ein Verfahren zum Betrieb einer Gasturbinenanlage (22) mit einer Gasturbine (30) mit einem Verdichter (36), bei dem Verdichteransaugluft durch Wärmezufuhr erwärmt und dem Verdichter (36) zugeführt wird. Um einen hohen Teillastwirkungsgrad der Gasturbinenanlage (22) oder einer GuD-Anlage (20, 74, 78, 84) zu erreichen, wird vorgeschlagen, dass die Erwärmung von vereisungsgefahrfreier Verdichteransaugluft zu einer Reduzierung der Leistung der Gasturbinenanlage (22) erfolgt.

## Beschreibung

Die Erfindung betrifft ein Verfahren zum Betrieb einer Gasturbinenanlage mit einer Gasturbine mit einem Verdichter, bei dem Verdichteransaugluft durch Wärmezufuhr erwärmt und dem Verdichter zugeführt wird. Außerdem betrifft die Erfindung eine Steuereinheit zur Steuerung eines Verfahrens zum Betrieb einer Gasturbinenanlage mit einer Gasturbine mit einem Verdichter und einer Wärmezufuhrvorrichtung zur Erwärmung von Verdichteransaugluft.

Eine Gasturbine umfasst einen Verdichter, der Umgebungsluft ansaugt, auf einen hohen Druck verdichtet und einer Brennkammer zuführt, in der sie mit Brenngas vermischt und anschließend verbrannt wird. Das aus der Verbrennung entstehende, unter sehr hohem Druck stehende heiße Abgas wird zu einer Turbine gelenkt, die durch eine Entspannung des Abgases angetrieben wird. Die Welle der Turbine ist einstückig oder verbunden mit der Welle des Verdichters ausgeführt, so dass die Turbine den Verdichter antreibt. Überschüssige Leistung wird auf eine Generatorwelle gelenkt zur Erzeugung von elektrischer Energie.

Da eine Gasturbine eine hohe Abwärme erzeugt, wird sie besonders effektiv in Verbindung mit einer Dampfturbine in einem kombinierten Prozess eingesetzt, bei dem die von der Gasturbine erzeugte Abwärme für einen Betrieb der Dampfturbine genutzt wird. Eine Gasturbinenanlage und eine Dampfturbinenanlage werden hierbei zu einer Kraftwerkseinheit mit einem Gesamtwirkungsgrad verschmolzen.

Bedingt durch die hohe Flexibilität des Strommarkts wird von Kraftwerken in immer verstärkterem Maße eine variable Leistungsabgabe verlangt. Aufgrund ihrer schnellen Reaktionsfähigkeit werden für einen flexiblen Betrieb oftmals Gasturbinen eingesetzt, deren Leistung durch eine Verstellung der Verdichterleitschaufeln, also durch eine Variation der Menge der zugeführten Verbrennungsluft, einfach und schnell verstellt werden kann. Eine Verringerung der Ausgangsleistung der Gasturbine durch Verringerung der Verbrennungsluftzufuhr ist jedoch mit einer unerwünschten Verringerung des Wirkungsgrads der Gasturbine verbunden. Dieser Nachteil wirkt sich besonders aus, wenn die Gasturbine über längere Zeiträume in einem Teillastbetrieb gefahren wird, was durch die stetig zunehmende Flexibilität des Strommarkts in zunehmendem Maße der Fall ist.

Es ist die Aufgabe der Erfindung, ein Verfahren zum Betrieb einer Gasturbinenanlage und eine Steuereinheit anzugeben, mit denen ein hoher Wirkungsgrad in einem Teillastbetrieb der Gasturbinenanlage erreicht werden kann.

Die auf das Verfahren gerichtete Aufgabe wird durch ein Verfahren der Eingangs genannten Art gelöst, bei dem erfindungsgemäß die Erwärmung von vereisungsgefahrfreier Verdichteransaugluft zu einer Reduzierung der Leistung der Gasturbinenanlage erfolgt. Durch die Erwärmung der Verdichteransaugluft kann eine Leistungsverringerung mit einem hohen Wirkungsgrad der Gasturbinenanlage verbunden werden.

Die Erfindung geht hierbei von der Überlegung aus, dass die Erwärmung der Verdichteransaugluft eine Ausdehnung der Verdichteransaugluft bewirkt und damit bei gleicher Verdichterleitschaufelstellung eine Massenstromverringerung erreicht werden kann, die eine Leistungsverringerung der Gasturbine bewirkt. Dieser bisher als negativ bewertete Effekt kann ausgenutzt werden, um die Gasturbine - oder eine Gesamtanlage mit einer Gas- und einer Dampfturbine (GuD-Anlage) - in einem Teillastbetrieb zu betreiben. Berechnungen haben jedoch gezeigt, dass mit der Erwärmung der Verdichteransaugluft durch Wärmezufuhr, z.B. durch Verdichterluftentnahme, nicht nur eine Leistungsverringerung, sondern auch eine unerwünschte Wirkungsgradverringerung der Gasturbine verbunden ist. Eine Wirkungsgradverringerung kann auch dann bestehen bleiben, wenn die Wärmeenergie zur Erwärmung nicht aus dem Gasturbinenprozess, sondern von außerhalb der Gasturbine verwendet wird, beispielsweise aus einem Dampfturbinenprozess. Zudem ist ein erhöhter technischer und finanzieller Aufwand nötig, um die Verdichteransaugluft in dem Maße zu erwärmen, dass eine signifikante Leistungsverringerung für einen Teillastbetrieb erreicht wird, so dass Nachteile gegenüber der einfach ausführbaren Verstellung der Verdichterleitschaufeln resultieren. Weitere Versuche haben allerdings gezeigt, dass eine Wirkungsgradverringerung durch Erwärmung der Verdichteransaugluft geringer ist als eine durch die Verstellung der Verdichterleitschaufeln bewirkte Wirkungsgradverringerung der Gasturbine. Der hierdurch bewirkte Vorteil kann die oben beschriebenen Nachteile übertreffen, wenn die Gasturbine bzw. die GuD-Anlage in starkem Maße in einem Teillastbetrieb betrieben wird.

Die Erwärmung von mit Vereisungsgefahr behafteter kalter und feuchter Verdichteransaugluft ist bekannt, um die Gefahr der Vereisung von Luftfilter, Verdichterdiffusor und den ersten Stufen des Verdichters zu eliminieren. Bei diesem sogenannten Anti-Icing wird üblicherweise Verdichteransaugluft erwärmt, die eine Luftfeuchtigkeit von über 80% und eine Temperatur von -5°c bis +5°C aufweist. Hierbei wird die Verdichteransaugluft so weit erwärmt, dass die Vereisungsgefahr überwunden ist. Im Gegensatz hierzu wird gemäß der Erfindung die Verdichteransaugluft auch dann erwärmt, wenn keine Vereisungsgefahr besteht, die Verdichteransaugluft also vereisungsgefahrfrei ist und insbesondere eine Luftfeuchtigkeit von unter 75%, insbesondere unter 65% aufweist und/oder eine Temperatur über 8°C, insbesondere über 10°C aufweist. Die Wärmezufuhr ist zweckmäßigerweise zu- und abschaltbar, insbesondere kontinuierlich steuerbar. Ein Teillastbetrieb zeichnet sich insbesondere durch eine geringere Leistung der Gasturbinenanlage aus, als eine bei gleichen Umweltbedingungen im regulären Betriebe erreichbare Leistung. Ein weiterer Unterschied zum Anti-Icing liegt darin, dass die Temperaturerhöhung bis zum Erreichen der gewünschten Teillastleistung durchgeführt wird. Demgegenüber wird beim Anti-Icing die Temperaturerhöhung unabhängig vom Erreichen einer Leistung bis zum Erreichen eines vereisungsgefahrfreien Betriebs durchgeführt. Es wird daher in einer vorteilhaften Ausgestaltung der Erfindung die Leistung der Gasturbinenanlage in Abhängigkeit von der Temperatur der erwärmten Verdichteransaugluft eingestellt.

In einer vorteilhaften Ausgestaltung der Erfindung wird der Verdichteransaugluft die Wärme auf der Grundlage eines Befehls zum Teillastbetrieb der Gasturbinenanlage, insbesondere einer GuD-Anlage, von der die Gasturbinenanlage ein Teil ist, zugeführt. Hierdurch kann die Anlage im Teillastbetrieb von Anfang an, also unmittelbar im Anschluss an den Befehl zum Teillastbetrieb, automatisch oder manuell so gesteuert werden, dass sie mit hohem Wirkungsgrad betrieben wird. Bei einer automatischen Steuerung der Erwärmung der Verdichteransaugluft bildet der Befehl zum Teillastbetrieb vorteilhafterweise den Trigger zur anfänglichen oder veränderten Erwärmung der Verdichteransaugluft, wobei eine Steuereinheit den Befehl zur Steuerung der Erwärmung verarbeiten kann.

Ein hoher Wirkungsgrad der Gasturbinenanlage bzw. der GuD-Anlage kann erreicht werden, wenn ansonsten nicht weitere verwendete Abwärme, beispielsweise aus einem luftgekühlten Generator oder einem Kondensator zur Erwärmung der Verdichteransaugluft verwendet wird. Mit der Wärme aus diesen Prozessen ist jedoch nur eine Erwärmung um nur wenige Grad Celsius möglich, da nur relativ wenig Energie bzw. eine geringe Temperaturdifferenz zwischen einem erwärmenden Medium und der zu erwärmenden Verdichteransaugluft zur Verfügung steht. Um im Gegensatz hierzu auch eine erhebliche Reduktion der Leistung der Gasturbinenanlage mit Hilfe einer Erwärmung der Verdichteransaugluft zu ermöglichen, ist es vorteilhaft, wenn die Verdichteransaugluft durch die Wärmezufuhr um über 10°C, zweckmäßigerweise um über 15°C und insbesondere um über 20°C erwärmt wird.

Zweckmäßigerweise wird die Verdichteransaugluft durch die Wärmezufuhr auf zumindest 20°C, insbesondere zumindest 30°C erwärmt. Um eine große Leistungsreduzierung und damit einen hohen Wirkungsgrad bei einem Teillastbetrieb zu erreichen, kann die Verdichteransaugluft vorteilhafterweise auch auf höhere Temperaturen von zumindest 40°C, in speziellen Fällen je nach Ausführung des Verdichters auch auf zumindest 50°C erwärmt werden. Dies gilt insbesondere bei hohen Umgebungstemperaturen, beispielsweise im Sommer.

In einer vorteilhaften Weiterbildung der Erfindung wird bei einem Betriebswechsel von einem ersten Betrieb zu einem durch Erwärmung der Verdichteransaugluft erreichbaren leistungsgeringeren zweiten Betrieb die Leistungsverringerung vom ersten zum zweiten Betrieb zumindest überwiegend durch Erwärmung der Verdichteransaugluft erreicht. Hierdurch können vorhandene Möglichkeiten für einen hohen Teillastwirkungsgrad zumindest weitgehend ausgeschöpft werden. Im Idealfall wird die Leistungsverringerung vollständig durch Erwärmung der Verdichteransaugluft erreicht. Die Erreichbarkeit bezieht sich auf die vorhandenen Mittel der Gasturbinenanlage.

Vorteilhafterweise wird die Wärme zur Erwärmung der Verdichteransaugluft aus einem Fernwärmesystem, sofern vorhanden, zugeführt. Ein Fernwärmesystem verfügt üblicherweise über ausreichende Wärmeleistung und Temperatur. Außerdem beeinflusst ein Entzug von Wärme aus einem Fernwärmesystem einen Gas- oder Dampfturbinenprozess nicht oder in unproblematischer Weise.

Ein besonders hoher Teillast-Wirkungsgrad einer GuD-Anlage kann erreicht werden, wenn die Wärme zur Erwärmung der Verdichteransaugluft aus einem Kondensatvorwärmer, z.B. unter Nutzung von Wärme einer Abhitzedampferzeugung, zugeführt wird.

Bei einem Teillastbetrieb mit einer sehr geringen Leistung unterhalb eines Umschaltpunkts kann eine Gasturbinenanlage einen hohen Schadstoffausstoß verursachen, beispielsweise durch eine magere Verbrennung mit einem hohen CO-Ausstoß. Wird die Verdichteransaugluft bei einem Minimallastbetrieb der Gasturbinenanlage erwärmt, so wird durch die Erwärmung der Umschaltpunkt, unterhalb dessen ein unzulässiger oder ein vorbestimmter und unerwünscht hoher CO-Ausstoß erfolgt, zu einer kleineren Last verschoben, so dass die Gasturbine mit einer geringen Leistung ohne einen hohen Schadstoffausstoß betrieben werden kann. Als Minimallastbetrieb wird ein Betrieb in einem Teillastbereich verstanden, der ohne eine Erwärmung der Verdichteransaugluft unterhalb des Umschaltpunkts liegt.

Die auf die Steuereinheit gerichtet Aufgabe wird durch eine Steuereinheit der Eingangs genannten Art gelöst, die zur Steuerung der Wärmezufuhrvorrichtung derart ausgebildet ist, dass vereisungsgefahrfreie Verdichteransaugluft zu einer Reduzierung der Leistung der Gasturbinenanlage erwärmt wird. Durch die Erwärmung der Verdichteransaugluft kann eine Leistungsverringerung mit einem hohen Teillast-Wirkungsgrad der Gasturbinenanlage verbunden werden. Zweckmäßigerweise ist die Steuereinheit zur Steuerung einer Wärmezufuhr zur Verdichteransaugluft auf der Grundlage eines Befehls zum Teillastbetrieb der Gasturbinenanlage vorbereitet.

Ein automatisierter Teillastbetrieb mit hohem Wirkungsgrad kann erreicht werden, wenn die Steuereinheit zur Realisierung von ausgewählten Betriebsparametern eines Teillastbetriebs durch Erwärmung der Verdichteransaugluft vorbereitet ist. Die Betriebsparameter können von einem Bediener oder einer Recheneinheit, beispielsweise einer Leitstelle, ausgewählt sein. Der Teillastbetrieb ist vorteilhafterweise ein regulärer Teillastbetrieb zur Erzeugung elektrischer Energie, dessen Parameter in einem Speichermedium hinterlegt sind.

In einer weiteren Ausführungsform der Erfindung umfasst die Steuereinheit einen Speicher mit einem darin abgelegten Betriebsmodus zum Betreiben der Gasturbinenanlage, bei dem zur Erreichung eines Teillastbetriebs stets zumindest die Hälfte der Leistungsreduzierung in Bezug zum Volllastbetrieb durch Erwärmung der Verdichteransaugluft und/oder zumindest die Hälfte der zu einer Erwärmung der Verdichteransaugluft zur Verfügung stehende Leistung zur Erwärmung der Verdichteransaugluft verwendet wird. Ist die Leistungsreduzierung vom Volllastbetrieb zum Teillastbetrieb durch die Erwärmung der Verdichteransaugluft erreichbar, so kann ein hoher Teillast-Wirkungsgrad erzielt werden, wenn die Leistungsreduzierung zumindest zur Hälfte, insbesondere zumindest zu 80% durch die Erwärmung realisiert wird. Ist die Leistungsreduzierung vom Volllastbetrieb zum Teillastbetriebs nicht allein durch die Erwärmung der Verdichteransaugluft erreichbar, so kann ein hoher Wirkungsgrad erzielt werden, wenn zumindest die Hälfte, insbesondere zumindest 80% der zu einer Erwärmung der Verdichteransaugluft zur Verfügung stehenden Leistung zur Erwärmung der Verdichteransaugluft verwendet wird.

Die Erfindung ist außerdem gerichtet auf eine Gas- und Dampfturbinenanlage (GuD-Anlage) mit einer Gasturbine mit einem Verdichter und einer Wärmezufuhrvorrichtung zum Erwärmen der Verdichteransaugluft und einer wie oben beschriebenen Steuereinheit. Hierbei ist die Wärmezufuhrvorrichtung zweckmäßigerweise zum Erwärmen der Verdichteransaugluft um mindestens 15°C und insbesondere auf mindestens 25°C bei maximalem Verdichteransaugluftfluss vorgesehen, um eine erhebliche Leistungsreduzierung mit einem hohen Wirkungsgrad zu erzielen.

Zur vorteilhaften Erwärmung der Verdichteransaugluft ist eine Wärmezufuhr in erheblichem Maße notwendig. So kann beispielsweise bei einer Volllastleistung der Gasturbine von 225 MW eine Wärmezufuhr von zumindest 6,5 MW nötig sein, um die Verdichteransaugluft von 10°C auf 25°C zu erwärmen. Wird diese große Wärmemenge von einem Heizvorwärmer der GuD-Anlage entnommen, so kann ein besonders hoher Wirkungsgrad erzielt werden. Hierfür umfasst die GuD-Anlage zweckmäßigerweise eine Wärmezuführung vom Heizvorwärmer zur Wärmezufuhrvorrichtung. Die Wärmeentnahme kann durch Entnahme von Rauchgaswärme im Bereich eines Kesselendes der GuD-Anlage erfolgen.

Eine gute Wirtschaftlichkeit wegen eines relativ geringen Einbauaufwands der Wärmeentnahme kann erreicht werden, wenn die Wärme aus einem Kondensatvorwärmer der GuD-Anlage entnommen wird. Hierzu umfasst die GuD-Anlage zweckmäßigerweise eine Wärmezuführung vom Kondensatvorwärmer zur Wärmezufuhrvorrichtung.

Eine besonders große Wärmemenge zur großen Erwärmung der Verdichteransaugluft kann von einem Niederdruckdampfsystem der GuD-Anlage zur Verfügung gestellt werden. Zur Realisierung dieser Ausführungsform der Erfindung umfasst die GuD-Anlage vorteilhafterweise eine Wärmezuführung vom Niederdruckdampfsystem zur Wärmezufuhrvorrichtung.

Die Erfindung wird anhand von Ausführungsbeispielen näher erläutert, die in den Zeichnungen dargestellt sind.

Es zeigen:
FIG 1 den Wirkungsgrad einer Gas- und Dampfturbinenanlage aufgetragen gegen deren Leistung in einem schematischen Diagramm,
FIG 2 den Wirkungsgrad und die Leistung einer Gasturbinenanlage aufgetragen gegen die Temperatur der Verdichteransaugluft,
FIG 3 den Wirkungsgrad der Gasturbinenanlage aufgetragen gegen deren Leistung,
FIG 4 ein Ablaufschema einer Leistungssteuerung der Gasturbinenanlage,
FIG 5 eine Gas- und Dampfturbinenanlage mit einer Wärmeentnahme in einem Heizvorwärmer zur Erwärmung von Verdichteransaugluft,
FIG 6 eine alternative Gas- und Dampfturbinenanlage mit einer Wärmeentnahme in einem Kondensatvorwärmer,
FIG 7 eine weitere Gas- und Dampfturbinenanlage mit einer Wärmeentnahme in einem Niederdruckdampfsystem und
FIG 8 eine weitere Gas- und Dampfturbinenanlage mit einer Wärmeentnahme in einem Fernwärmesystem.

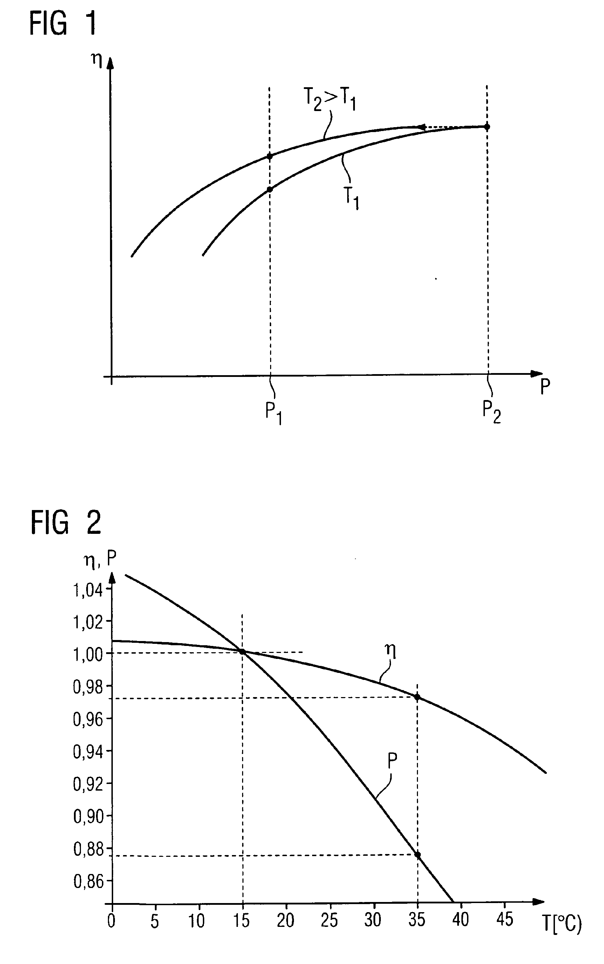

FIG 1 zeigt ein schematisches Diagramm, in dem der Wirkungsgrad h einer Gas- und Dampfturbinenanlage (GuD-Anlage), also einer Anlage mit einer Gasturbinenanlage und einer Dampfturbinenanlage, für zwei unterschiedliche Temperaturen T₁ und T₂ von Verdichteransaugluft aufgetragen ist in Abhängigkeit von der Leistung P der GuD-Anlage. Bei beiden Temperaturen T₁, T₂ der Verdichteransaugluft fällt der Wirkungsgrad h der GuD-Anlage mit sinkender Leistung P ab. Außerdem ist die Leistung P bei der Temperatur T₂ der Verdichteransaugluft geringer als bei der höheren Temperatur T₁ der Verdichteransaugluft. Eine Teillast P₁ der GuD-Anlage kann daher bei warmer Verdichteransaugluft der Temperatur T₂ mit einem höheren Wirkungsgrad h erreicht werden als mit kühlerer Verdichteransaugluft der Temperatur T₁. Zur Reduzierung der Leistung P von einer Vollast P₂ zu einer Teillast kann daher beispielsweise zunächst die Verdichteransaugluft von der Temperatur T₁ auf die Temperatur T₂ erwärmt werden, wie durch einen gestrichelten Pfeil angedeutet ist. Reicht diese Leistungsreduzierung nicht aus, um eine gewünschte Teillast Teillast P₁ wie in FIG 1 zu erreichen, kann die Leistung P durch gewöhnliche Maßnahmen, wie eine Verstellung von Verdichterleitschaufeln, weiter reduziert werden.

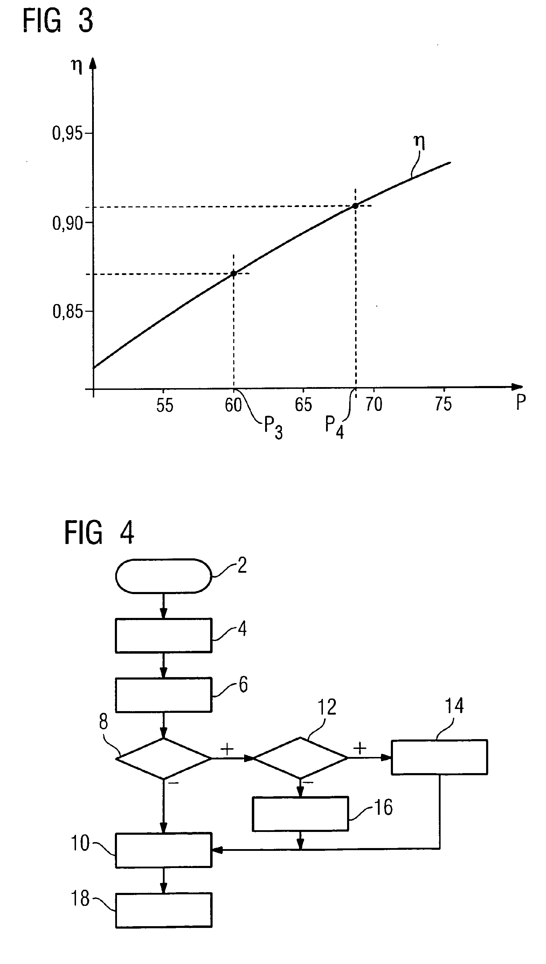

In FIG 2 ist der Wirkungsgrad h einer Gasturbinenanlage und deren Leistung P in einem Diagramm aufgetragen gegen die Temperatur T der Verdichteransaugluft. Der Wirkungsgrad h und die Leistung P sind auf Standardbedingungen bei 15°C normiert. Wird die Verdichteransaugluft von 15°C auf 35°C erwärmt, so sinkt die Leistung von 100% auf 87,5% ab. Gleichzeitig sinkt der Wirkungsgrad h von 100% auf 97,2% ab. Dieser Wirkungsgradverlust ist jedoch nicht so ausgeprägt, wie ein Wirkungsgradverlust durch eine Verstellung der Verdichterleitschaufeln, wie anhand des Diagramms aus FIG 3 dargestellt ist.

FIG 3 zeigt den Wirkungsgrad h der Gasturbinenanlage gegen deren Leistung P. Wird die Leistung P von Vollast auf eine Teillast P₃ von 60% der Vollast durch eine Verstellung der Verdichterleitschaufeln reduziert, so sinkt der auf die Volllast normierte Wirkungsgrad h von 1,00 auf 0,87 ab. Die gleiche Leistungsreduzierung kann erreicht werden, indem die Verdichterleitschaufeln so verstellt werden, dass eine Teillast P₄ von 68,5% bei einem Wirkungsgrad h von 0,91 erreicht wird und durch eine zusätzliche Erwärmung der Verdichteransaugluft von 15°C auf 35°C, wie in FIG 2 dargestellt ist. Hierdurch sinkt die Leistung P nochmals um 12,5% ab, so dass die Leistung P ebenfalls 60% beträgt (0,685 x 0,875 = 0,6). Der Wirkungsgrad h liegt nunmehr bei 0,91 x 0,975 = 0,887, so dass eine Wirkungsgradsteigerung der Gasturbinenanlage von über 1,5% erreicht wird.

Ein vereinfachter Ablauf aus einem Verfahren zum Betrieb der Gasturbinenanlage ist in FIG 4 dargestellt. Nach einem Start 2 des Verfahrens wird in einem Teillastbefehl 4 von einem Bediener oder einer Steuervorrichtung einer Leitstation die Vorgabe für einen Teillastbetrieb der Gasturbinenanlage gegeben. Eine Steuereinheit der Gasturbinenanlage ermittelt nun in einem Verfahrensschritt 6 auf der Grundlage des Befehls zum Teillastbetrieb die zur Erfüllung des Teillastbetriebs notwendigen Parameter. Außerdem wird durch die Steuereinheit in einer Prüfung 8 ermittelt, ob der Teillastbetrieb durch eine Erwärmung der Verdichteransaugluft erreicht werden kann, oder ob zusätzlich Verdichterleitschaufeln verstellt werden müssen. Ist dies nicht notwendig, wird die Verdichteransaugluft durch eine Wärmezufuhr 10 bis zum Erreichen der Teillast erwärmt. Ist eine Verstellung notwendig, so ermittelt die Steuereinheit in einer weiteren Prüfung 12, ob die Teillast in einem Minimallastbereich liegt, innerhalb dessen die Verdichteransaugluft erwärmt werden muss, um einen geringen Schadstoffausstoß einzuhalten. Entsprechend der Prüfung 12 werden Parameter der Gasturbinenanlage eingestellt und beispielsweise die Verdichterleitschaufeln verstellt (14, 16). In einer von der Steuereinheit durchgeführten Regelung 18 wird die Gasturbinenanlage auf im gewünschten Teillastbetrieb gehalten.

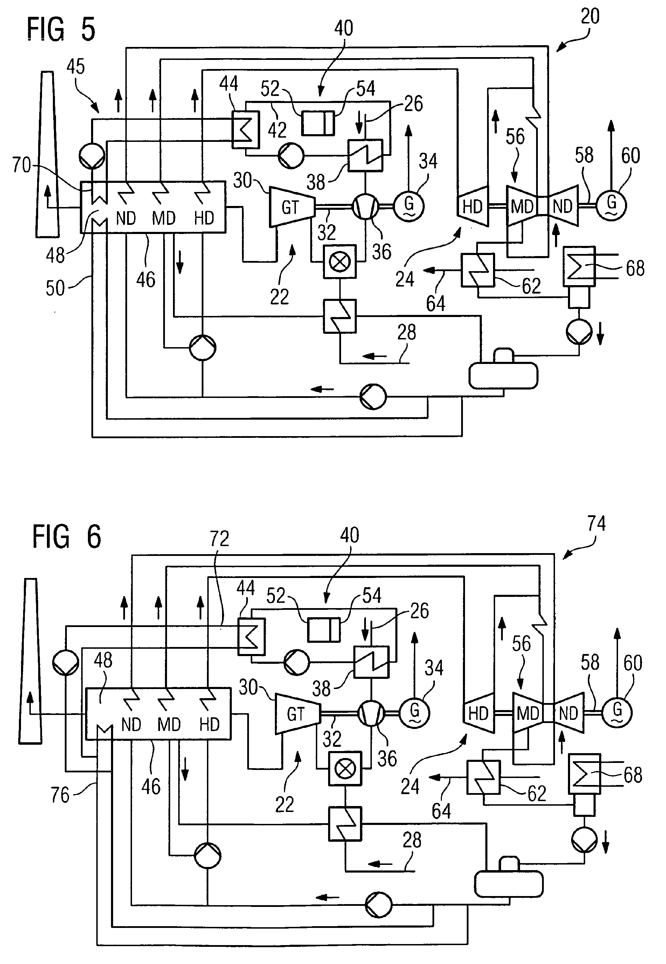

FIG 5 zeigt eine Gas- und Dampfturbinenanlage 20 (GuD-Anlage 20) mit einer Gasturbinenanlage 22 und einer Dampfturbinenanlage 24 in einer schematischen Übersicht. Die Gasturbinenanlage 22 umfasst eine Luftzuführung 26 und eine Gaszuführung 28, über die einer Gasturbine 30 Luft und Brenngas zugeführt wird. Über eine Welle 32 ist die Gasturbine 30 mit einem Generator 34 zur Stromerzeugung verbunden. Ein ebenfalls durch die Welle 32 angetriebener Verdichter 36 dient zur Verdichtung der Verbrennungsluft, die in einem Wärmetauscher 38 erwärmt wird. Der Wärmetauscher 38 ist Teil einer Wärmezufuhrvorrichtung 40 mit einem Heizkreislauf 42, der mit Wasser und Glykol als Frostschutz betrieben wird. Durch einen weiteren Wärmetauscher 44 einer Wärmezuführung 45 wird Wärme aus einem Kessel 46 der GuD-Anlage 20 in den Heizkreislauf 42 übertragen. Der Kessel 46 umfasst einen Hochdruck-, Mitteldruck- und Niederdruckteil sowie einen Heizvorwärmer 48 wärmeabwärtsseitig des Niederdruckteils zur Vorwärmung des Kondensats der Dampfturbinenanlage 24. Die Wärme für den Heizkreislauf 42 kann, wie in FIG 5 dargestellt ist, wärmeseitig parallel oder abwärts von einem Kondensatvorwärmer 50 entnommen werden. Eine schematisch dargestellte Steuereinheit 52 mit einem Speicher 54 zum Speichern von Betriebsmodi zum Betreiben der Gasturbinenanlage 22 bzw. der GuD-Anlage 20 dient zur Steuerung der Prozesse der GuD-Anlage 20.

Im Kessel 46 erhitzter Wasserdampf wird einer Dampfturbine 56 mit einem Hoch-, Mittel- und Niederdruckteil zugeführt und dort zur Erzeugung mechanischer Energie entspannt, die über eine Welle 58 einem Generator 60 zur Stromerzeugung zugeführt wird. Dampf aus dem Mitteldruckteil wird einem Wärmetauscher 62 zur Übertragung in ein Fernwärmesystem 64 zugeführt. Der von der Dampfturbine 56 entspannte Dampf wird über einen Kondensator 68 geführt und als Kondensat dem Kessel 46 zur erneuten Erhitzung zugeführt.

Durch einen zusätzlichen Wärmetauscher 70 im Heizvorwärmer 48 im Bereich des Kesselendes ist die Wärmezufuhrvorrichtung 40 relativ aufwendig. Sie kann jedoch in dieser Ausführung bereits bei einer Erwärmung der dem Verdichter 36 zugeführten Verdichteransaugluft von beispielsweise 10°C auf nur 25°C einen hohen Teillast-Wirkungsgradgewinn der GuD-Anlage 20 von 0,9 Prozentpunkten erzielen.

Einfacher und kostengünstiger in der Herstellung ist eine in FIG 6 dargestellte Wärmezuführung 72 zur Wärmezufuhrvorrichtung 40. FIG 6 zeigt einen Ausschnitt einer GuD-Anlage 74 mit der Wärmezuführung 72, die gegenüber der Wärmezuführung zur Wärmezufuhrvorrichtung 40 etwas modifiziert ist. Die nachfolgenden Beschreibungen beschränken sich im Wesentlichen auf die Unterschiede zum Ausführungsbeispiel in FIG 5, auf das bezüglich gleichbleibender Merkmale und Funktionen verwiesen wird. Im Wesentlichen gleichbleibende Bauteile sind grundsätzlich mit den gleichen Bezugszeichen beziffert. Die Wärmezuführung 72 entnimmt die Wärme aus einem Kondensatvorwärmeraustritt 76 und speist das im Wärmetauscher 44 abgekühlte Wasser in das Kondensatsystem zurück. Der Wirkungsgradgewinn ist bei dieser Ausführung bei Erwärmungen der Verdichteransaugluft um 15°C zwar nicht so hoch wie bei der Wärmezufuhrvorrichtung 40. Bei einer entsprechenden Dimensionierung des Heizvorwärmers 48 kann jedoch durch eine höhere Erwärmung der Verdichteransaugluft ein ebenfalls großer Wirkungsgradgewinn erzielt werden.

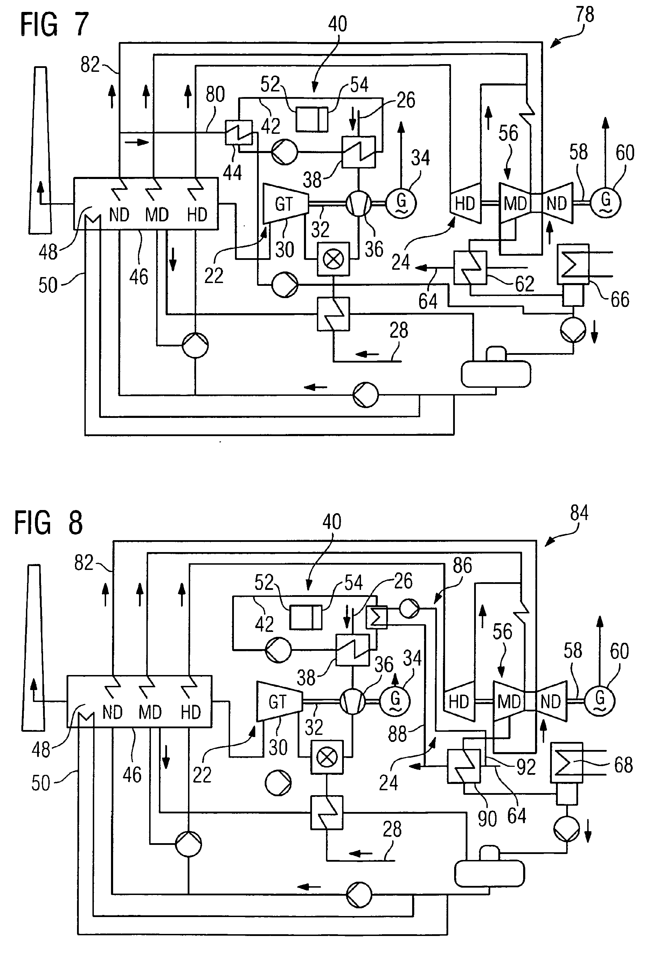

FIG 7 zeigt eine GuD-Anlage 78 mit einer weiteren Wärmezuführung 80 zur Wärmezufuhrvorrichtung 40, die Wärme zum Erwärmen der Verdichteransaugluft aus einem Niederdruckdampfsystem 82 der GuD-Anlage entnimmt und das im Wärmetauscher 44 abgekühlte Wasser in das Kondensatsystem zurückgibt. Bei dieser Ausführungsform steht eine sehr große Wärmemenge zur sehr weiten Aufheizung der Verdichteransaugluft zur Verfügung.

Bei dem in FIG 8 gezeigten Ausführungsbeispiel wird Wärme zur Erwärmung der Verdichteransaugluft aus dem Fernwärmesystem 64 einer in FIG 8 dargestellten GuD-Anlage 84 entnommen. Eine hierzu vorgesehene Wärmezuführung 86 weist beispielsweise einen Zulauf 88 zur Entnahme von warmem Wasser aus dem Fernwärmesystem 64 strömungsseitig hinter einem Wärmetauscher 90 des Fernwärmesystems 64 und einen Rücklauf 92 für erkaltetes Wasser strömungsseitig vor dem Wärmetauscher 90 auf.

## Patentansprüche

1. Verfahren zum Betrieb einer Gasturbinenanlage (22) mit einer Gasturbine (30) mit einem Verdichter (36), bei dem Verdichteransaugluft durch Wärmezufuhr erwärmt und dem Verdichter (36) zugeführt wird,
**dadurch gekennzeichnet, dass** die Erwärmung von vereisungsgefahrfreier Verdichteransaugluft zu einer Reduzierung der Leistung der Gasturbinenanlage (22) erfolgt.

2. Verfahren nach Anspruch 1,
**dadurch gekennzeichnet, dass** der Verdichteransaugluft die Wärme auf der Grundlage eines Befehls zum Teillastbetrieb der Gasturbinenanlage (22) zugeführt wird.

3. Verfahren nach Anspruch 1 oder 2,
**dadurch gekennzeichnet, dass** die Verdichteransaugluft durch die Wärmezufuhr um mehr als 10°C, insbesondere um mehr als 15°C erwärmt wird.

4. Verfahren nach einem der vorhergehenden Ansprüche,
**dadurch gekennzeichnet, dass** die Verdichteransaugluft durch die Wärmezufuhr auf über 20°C, insbesondere über 30°C erwärmt wird.

5. Verfahren nach einem der vorhergehenden Ansprüche,
**dadurch gekennzeichnet, dass** bei einem Betriebswechsel von einem ersten Betrieb zu einem durch Erwärmung der Verdichteransaugluft erreichbaren leistungsgeringeren zweiten Betrieb die Leistungsverringerung vom ersten zum zweiten Betrieb zumindest überwiegend durch Erwärmung der Verdichteransaugluft erreicht wird.

6. Verfahren nach einem der vorhergehenden Ansprüche,
**dadurch gekennzeichnet, dass** die Wärme zur Erwärmung der Verdichteransaugluft aus einem Fernwärmesystem (64) zugeführt wird.

7. Verfahren nach einem der vorhergehenden Ansprüche,
**dadurch gekennzeichnet, dass** die Wärme zur Erwärmung der Verdichteransaugluft aus einem Kondensatvorwärmer (50) zugeführt wird.

8. Verfahren nach einem der vorhergehenden Ansprüche,
**dadurch gekennzeichnet, dass** die Verdichteransaugluft bei einem Minimallastbetrieb der Gasturbinenanlage (22) erwärmt wird.

9. Steuereinheit (52) zur Steuerung eines Verfahrens zum Betrieb einer Gasturbinenanlage (22) mit einer Gasturbine (30) mit einem Verdichter (36) und einer Wärmezufuhrvorrichtung (40) zur Erwärmung von Verdichteransaugluft,
**gekennzeichnet durch** ihre Vorbereitung zur Steuerung der Wärmezufuhrvorrichtung (40) derart, dass vereisungsgefahrfreie Verdichteransaugluft zu einer Reduzierung der Leistung der Gasturbinenanlage (22) erwärmt wird.

10. Steuereinheit (52) nach Anspruch 9,
**gekennzeichnet durch** ihre Vorbereitung zur Realisierung von ausgewählten Betriebsparametern eines Teillastbetriebs **durch** Erwärmung der Verdichteransaugluft.

11. Steuereinheit (52) nach Anspruch 9 oder 10, **gekennzeichnet durch** einen Speicher (54) mit einem darin abgelegten Betriebsmodus zum Betreiben der Gasturbinenanlage (22), bei dem zur Erreichung eines Teillastbetriebs stets zumindest die Hälfte der Leistungsreduzierung in Bezug zum Volllastbetrieb **durch** Erwärmung der Verdichteransaugluft und/oder zumindest die Hälfte der zu einer Erwärmung der Verdichteransaugluft zur Verfügung stehende Leistung zur Erwärmung der Verdichteransaugluft verwendet wird.

12. Gas- und Dampfturbinenanlage (20, 74, 78, 84) mit einer Gasturbine (30) mit einem Verdichter (36) und einer Wärmezufuhrvorrichtung (40) zum Erwärmen der Verdichteransaugluft und einer Steuereinheit (52) nach einem der Ansprüche 9 bis 11.

13. Gas- und Dampfturbinenanlage (20) nach Anspruch 12, **gekennzeichnet durch** einen Heizvorwärmer (48) und eine Wärmezuführung (45) vom Heizvorwärmer (48) zur Wärmezufuhrvorrichtung (40).

14. Gas- und Dampfturbinenanlage (74) nach Anspruch 12 oder 13,
**gekennzeichnet durch** einen Kondensatvorwärmer (50) und eine Wärmezuführung (72) vom Kondensatvorwärmer zur Wärmezufuhrvorrichtung (40).

15. Gas- und Dampfturbinenanlage (78) nach einem der Ansprüche 12 bis 14,
**gekennzeichnet durch** ein Niederdruckdampfsystem (82) und eine Wärmezuführung (80) vom Niederdruckdampfsystem (82) zur Wärmezufuhrvorrichtung (40).
